# FASCICULE DE BREVET EUROPEEN

(11) **EP 1 349 513 B1**
(45) Date de publication et mention de la délivrance du brevet: **15.10.2008**
(21) Numéro de dépôt: 02710973.5
(22) Date de dépôt: 11.01.2002
(51) Int. Cl.: A61C 8/00

(54) **IMPLANT DENTAIRE TRANSITOIRE DE PREPARATION D'UNE ALVEOLE**
TEMPORÄRES ZAHNIMPLANTAT ZUR KAVITÄTVORBEREITUNG
PROVISIONAL DENTAL IMPLANT FOR PREPARING AN ALVEOLUS

(30) Priorité: 12.01.2001 FR 0100404
(43) Date de publication de la demande: 08.10.2003
(73) Titulaire: Henkel AG & Co. KGaA, 40589 Düsseldorf (DE)
(72) Inventeur: GAULT, Philippe, F-45100 Orléans (FR)
(74) Mandataire: Tezier Herman, Béatrice
(86) Numéro de dépôt international: PCT/FR2002/000097
(87) Numéro de publication internationale: WO 2002/054973

(56) Documents cités:
- WO-A-00/21456
- WO-A-99/39651
- DE-A- 3 533 395
- DE-A- 19 741 087
- DE-U-2202006 002 23
- US-A- 4 051 598
- US-A- 4 186 486
- US-A- 5 098 779
- US-A- 6 132 214
- US-A- 6 159 010

## Description

La présente invention concerne un implant dentaire transitoire destiné à préparer l'alvéole d'une dent extraite en vue de la mise en place ultérieure d'un implant dentaire déterminé. Elle concerne également l'utilisation de cet implant dentaire provisoire d'un point de vue médical, fonctionnel et/ou esthétique. Sont également décrits des kits, méthodes et outils, notamment des modèles en résine, utilisables pour l'application, la préparation ou le choix morphologique des implants ci-avant.

La dent naturelle est ancrée dans une cavité appelée alvéole, dans l'os des maxillaires. Cette dent est extraite lorsqu'elle est atteinte par des lésions trop sévères pour être traitée : carie profonde, poche parodontale, fêlure, fractures, abcès, traumatisme. La mise en place d'un implant dentaire peut alors s'avérer la meilleure solution applicable pour son remplacement.
L'acte implantaire est le résultat d'une démarche prudente et réfléchie dont le but est de créer des ancrages au maxillaire ou à la mandibule qui soient stables, résistants, efficaces, non iatrogènes et durables et sur lesquels s'adapte une prothèse amovible ou fixée en vue de redonner au patient partiellement ou complètement édenté, une fonction adéquate, un confort satisfaisant et une esthétique compatible avec une fonction sociale.

En matière d'implantation, deux techniques sont essentiellement pratiquées aujourd'hui :
a) Les prothèses sur implants ostéo-intégrées qui sont des racines artificielles en titane qui se stabilisent par ankylose osseuse. La force masticatoire est transmise à l'os sans aucun amortissement, du fait de l'absence du ligament alvéolo-dentaire qui est un facteur important de protection des dents contre les impacts, les surcharges et les risques de fracture.
b) Les transplantations ou autres greffes dentaires, qui n'ont pas les inconvénients de l'approche précédente mais nécessitent la disponibilité d'une dent donneuse adéquate et généralement non fonctionnelle.
Les transplantations et réimplantations dentaires sont pratiquées depuis plusieurs décennies et de nombreuses techniques ont été décrites.
Une autre technique possible, décrite récemment dans la demande de brevet WO 00/21456, propose de remplacer les dents perdues par des dents artificielles inaltérables connectées aux maxillaires par les mêmes éléments tissulaires que les dents naturelles, c'est-à-dire un cément, un ligament alvéolo-dentaire et un os alvéolaire et permettant une attache normale de la gencive au collet de l'implant. Cette technique permet au parodonte d'assurer avantageusement son rôle physiologique normal, à savoir essentiellement amortir les contraintes de la mastication.

Pendant longtemps, l'implantologie orale a été synonyme de complications.
L'implantologie orale comprend en effet des risques d'échecs et des contre-indications liées principalement aux défauts osseux en volume et en densité, à la faiblesse de la vascularisation de certaines zones osseuses, à l'échauffement possible des tissus pendant les phases de forage des alvéoles qui peuvent aboutir à des nécroses tissulaires péri-implantaires, et aux processus infectieux liés essentiellement à la flore buccale ou aux débris radiculaires ou d'obturation dentaire parfois inclus dans l'os après extraction.

Un examen préalable soigneux, un assainissement buccal préalable, dentaire et parodontal, une couverture per opératoire par antibiotiques, un protocole chirurgical respectueux des règles et des données acquises de la science permettent de limiter le risque d'échec en dessous de 5%.

La présente invention propose ainsi, pour la première fois, une solution permettant de réduire encore le risque d'échec tout en permettant une stimulation biologique des tissus. Il s'agit d'un implant dentaire transitoire de préparation de l'alvéole destinée à recevoir l'implant définitif. Il opère autant pour les implants ostéo-intégrables que pour les implants avec cément et ligament alvéolo-implantaire (Brevet WO 00/21456). L'implant de préparation est constitué d'une partie coronaire et d'une partie radiculaire, cette dernière étant creuse et partiellement poreuse. Le compartiment créé à l'intérieur de l'implant de préparation est destiné à contenir une composition active laquelle est libérée directement sur le site alvéolaire présentant un risque d'infection, par l'intermédiaire de pores ou pertuis responsables de la porosité de la partie radiculaire de l'implant de préparation. Un implant ostéointégrable dont la partie radiculaire est creux et pourvue de pores afin de libérer une composition est connu de document US 4,186, 486.

Un autre avantage de la présente invention est la conservation ou le remodelage de la taille de l'alvéole adaptée pour la mise en place de l'implant déterminé au départ.

L'implant de préparation de l'alvéole permet également de guider la cicatrisation de l'alvéole de manière à optimiser l'ostéo-intégration ou la parodonto-intégration.

Un premier objet de la présente demande réside donc dans un implant dentaire transitoire de préparation d'une alvéole, caractérisé en ce qu'il est constitué d'une partie coronaire et d'une partie radiculaire dissociables et en ce que la partie radiculaire est creuse et partiellement poreuse. L'implant dentaire selon l'invention est un implant transitoire, c'est-à-dire destiné à préparer une alvéole en vue de la pose ultérieure d'un implant définitif. Il est donc destiné à être placé chez un sujet de manière temporaire, pendant la période de temps nécessaire à la préparation de l'implant définitif, et permet de préparer le site d'implantation pour favoriser la réussite du traitement, et de raccourcir le temps de l'opération globale. Il s'agit typiquement d'un implant transitoire non-ostéo-intégrable, c'est-à-dire non intégré de manière définitive dans l'os.

La présente demande décrit également l'utilisation d'un implant dentaire comprenant une partie coronaire et une partie radiculaire dissociables, la partie radiculaire étant creuse et partiellement poreuse, pour la préparation d'une composition ou d'un kit destiné à une implantation transitoire chez un sujet en vue de la préparation d'une alvéole destinée à recevoir un implant définitif. L'implantation transitoire signifie que l'implant transitoire est maintenu dans l'alvéole pendant une période de temps déterminée, typiquement de un à cinq mois, par exemple de un à deux mois, puis est retiré. Il est typiquement non-ostéo-intégrable, c'est-à-dire non intégré de manière définitive dans l'os.

La présente demande décrit par ailleurs une méthode d'implantation dentaire chez un sujet, comprenant une étape de préparation d'une alvéole destinée à recevoir un implant définitif par mise en place d'un implant transitoire comprenant une partie coronaire et une partie radiculaire dissociables, la partie radiculaire étant creuse et partiellement poreuse.

Une méthode particulière comprend (i) l'extraction d'une dent atteinte, (ii) la mise en place dans l'alvéole de ladite dent d'un implant transitoire comprenant une partie coronaire et une partie radiculaire dissociables, la partie radiculaire étant creuse et partiellement poreuse et (iii), le retrait de l'implant transitoire et la mise en place d'un implant définitif dans l'alvéole ainsi préparée. L'étape (i) est facultative dans la mesure où l'implantation peut être réalisée au niveau d'un site déjà dépourvu de dent.

La présente demande décrit en outre la préparation d'un produit ou kit destiné à favoriser la reconstruction osseuse maxillaire ou mandibulaire chez des patients pour lesquels la pose d'un implant requérait auparavant une greffe osseuse, étape chirurgicale supplémentaire et complexe, demandant un délai complémentaire d'au moins quatre mois. L'implant de préparation de l'alvéole permet donc de guider la cicatrisation de façon optimale, et, dans le cas des implants parodonto-intégrables qui nécessitent une préparation en laboratoire par des techniques de génie tissulaire, de maintenir la morphologie adéquate de l'alvéole pendant le délai nécessaire aux étapes in vitro.

Des modèles de dents jetables utilisables comme jauge, ainsi que des kits d'utilisation, comprenant par exemple plusieurs jeux d'implants transitoires ou de modèles jetables sont également décrits.

### Légendes des Figures

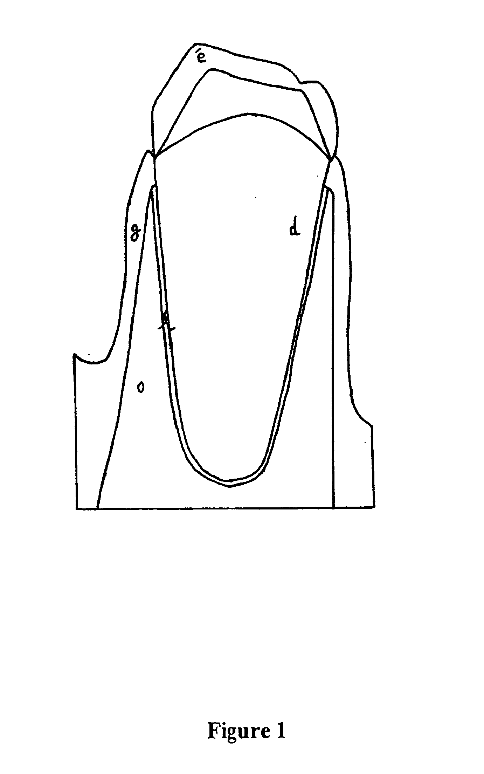

- Figure n°1:: Schéma d'une coupe de dent naturelle : émail (é), dentine (d), os maxillaire (o), gencive (g), ligament (1).

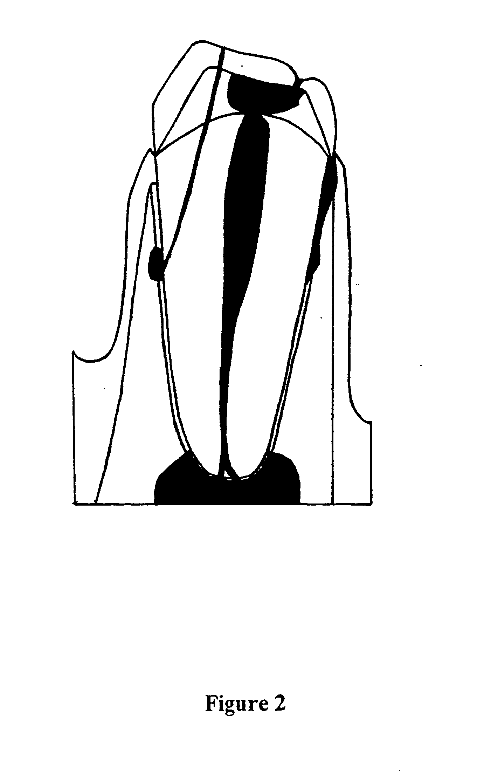

- Figure n°2 :: Schéma d'une coupe de dent atteinte par des lésions trop sévères pour être traitées : carie profonde, poche parodontale, fêlure, fracture, abcès, traumatisme.
- Figure n°3 :: Exemple de modèle en résine, jetable, comportant un moyen de préhension (m) situé sur la partie correspondant à la région coronaire d'une dent et permettant de jauger après extraction de la dent malade, la taille de l'implant de préparation et donc de l'implant définitif nécessaire pour le remplacement de la dent. Ce
- modèle peut: être monochrome mais doit permettre de visualiser le collet de la dent pour le placer au niveau de la gencive.

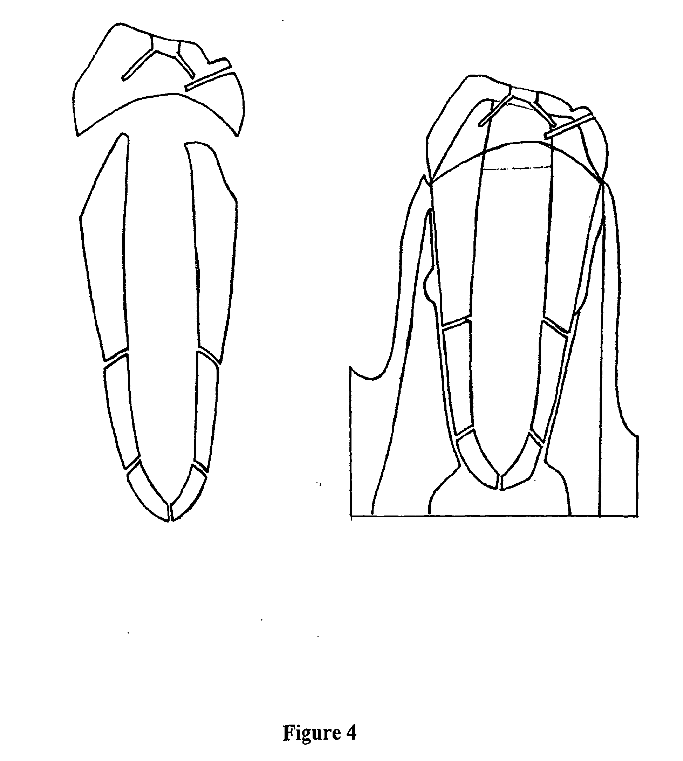

- Figure n°4 :: Implant dentaire transitoire de préparation d'une alvéole. Elle permet de conserver la taille de l'alvéole adaptée pour la mise en place de l'implant définitif déterminé au départ, et guide la cicatrisation. Elle est creuse, pour permettre, par des pores, une libération lente de composition active qui va préparer le site receveur de l'implant définitif. Elle est recouverte et fermée par une couronne en résine ou en composite à rainures, par exemple, qui peut être suturée à la gencive ou collée aux dents voisines. Cet ensemble permet de remplacer immédiatement la dent extraite sur le plan cosmétique.

### Structure et matériaux constitutifs de l'implant dentaire de préparation de l'alvéole :

La présente invention concerne un implant dentaire de préparation de l'alvéole destinée à recevoir l'implant définitif. L'implant de préparation est constitué d'une partie coronaire et d'une partie radiculaire dissociables.

La partie coronaire recouvre et ferme la partie radiculaire. La fermeture peut-être assurée grâce à tout type de composé autorisant la liaison provisoire des deux parties de l'implant. Selon un mode préféré de l'invention, les deux parties sont liées à l'aide d'un ciment provisoire. Selon un autre mode préféré de l'invention, la partie coronaire est munie, sur sa face palatine, d'un pertuis sur lequel le praticien peut prendre appui avec un instrument, pour, en exerçant un mouvement de levier, séparer plus facilement, la partie coronaire de la partie radiculaire, si nécessaire.

La partie coronaire de l'implant de préparation est adaptée à la partie radiculaire de cet implant, choisie sur la base de la dent extraite à remplacer, et peut être réalisée dans tout matériau biocompatible adapté mécaniquement. Il peut s'agir par exemple d'une résine méthyl-métacrylate simple. Selon un mode préféré de l'invention, la partie coronaire est réalisée dans un matériau composite. Selon un autre mode préféré de l'invention, la couronne est réalisée dans un matériau composite à base de résine méthylmétacrylate chargée.
Cette couronne peut être collée aux dents voisines pour obtenir la stabilisation de l'implant transitoire. En alternative, cette couronne peut être retenue par des fils de suture à la gencive et donc maintenir la partie radiculaire dans l'alvéole. En ce cas, la couronne comprend des conduits et/ou des rainures servant à stabiliser les fils de suture (cf: Dessin n°1). Cette couronne est réglée pour rester en sous-occlusion dans tous les mouvements de la mandibule, de sorte que les tissus sous-jacents puissent cicatriser sans subir de compression significative. Elle présente également l'avantage esthétique de permettre de remplacer immédiatement une dent extraite après le choix du bon modèle morphologique. Les sutures utilisées peuvent être tout type de sutures bio-dégradables ou non biodégradables dont la durée de fonctionnalité est d'au moins quatre à cinq semaines. Selon un mode préféré de l'invention, les sutures utilisées sont des sutures non biodégradables en téflon.

La partie radiculaire de l'implant transitoire peut prendre des formes et dimensions variées, essentiellement déterminées par le type de dent et par le type d'implant.
Dans le cas où un implant définitif parodonto-intégrable est envisagé, la partie radiculaire de l'implant de préparation possède une forme globalement adaptée à celle de la dent extraite à remplacer. Cependant, il est également possible de modifier l'alvéole, par exemple avec des fraises à os, après l'extraction dentaire, pour l'adapter au mieux à l'un des modèles de forme disponibles. Le modèle et l'implant de préparation seront légèrement plus grands que l'implant définitif avec cément et ligament, pour laisser un espace de 50 à 300 micromètres, par exemple, destiné au développement du ligament et de l'os alvéolaire accrochant le ligament au reste du maxillaire. Cet espace permet d'éviter la formation de zones de compression permanente entre la racine implantaire et l'os du maxillaire lors de la mise en place de l'implant définitif parodonto-intégrable.
Dans le cas où l'implant définitif envisagé est ostéo-intégrable, la forme de l'implant de préparation de l'alvéole est généralement cylindrique ou légèrement conique ou à échelons selon le type d'implant prévu. Sa longueur est celle de l'implant définitif envisagé. Par contre, son diamètre est généralement plus petit, par exemple d'environ 1 millimètre, pour permettre l'insertion dans l'os cicatrisé des spires de l'implant ostéo-intégrable définitif et sa bonne stabilité initiale indispensable au résultat.

La partie radiculaire de l'implant de préparation d'une alvéole, décrite dans la présente demande peut être réalisée dans tout matériau biocompatible, et mécaniquement suffisamment résistant pour éviter les risques de fracture. Selon l'invention, la racine de préparation est réalisée en polytétrafluoroéthylène. D'autres racines de préparation décrites dans la présente demande sont réalisées en plastique bliocompatible, par exemple en polycarbonate, ou en polymétacrylate de méthyle.

La partie radiculaire de l'implant de préparation d'une alvéole, selon l'invention, comporte une cavité pouvant contenir une composition active. La partie radiculaire comporte par ailleurs des trous ou pertuis ayant un diamètre suffisant pour assurer une diffusion effective de la composition active, au niveau de l'alvéole, par exemple sur une période de 4 à 5 semaines, de préférence de 6 à 8 semaines.

La cavité de la partie radiculaire de l'implant de préparation d'une alvéole peut, selon un autre mode de réalisation de l'invention, être compartimentée et contenir ainsi, dans chaque compartiment, une composition active particulière qui agira préférentiellement à un niveau donné de l'alvéole.

Le nombre, la position et le diamètre des pores peuvent être adaptés par l'homme du métier, en fonction du type de dent, de la composition active, etc. En outre, il est également possible, selon la durée du traitement, de remplir à nouveau la cavité de la partie radiculaire, en la désolidarisant de la partie coronaire, après implantation.

### Composition active libérée par la partie radiculaire de l'implant de préparation de l'alvéole :

La composition active que la cavité, décrite dans le paragraphe précédent, peut contenir, se présente, par exemple, sous forme solide ou liquide, sous forme de gel ou de pâte ou encore sous une forme micro-encapsulée. Elle peut contenir tout composé biologiquement actif dont la libération au niveau de l'alvéole est désirée.
La composition active peut contenir :
- un ou plusieurs antibiotiques, pour décontaminer le site implantaire ; il peut s'agir par exemple de tétracycline. Il peut également s'agir de métronidazole.
- un insaponifiable, par exemple de maïs, de soja ou d'avocat, qui favorise la cicatrisation collagénique, et/ou
- une vitamine (pour le même objectif), et/ou
- un ou plusieurs facteurs de croissance, pour accélérer la cicatrisation, (par exemple le PDGF, le TGFb, l'IGF, l'EGF, la BMP, les amélogénines, etc.) et/ou
- un ou plusieurs composants hémosatiques, et/ou
- une ou plusieurs hormones, comme par exemple la dexaméthasone, favorisant la minéralisation des tissus, et/ou
- une ou plusieurs autres molécules pour préparer le site de l'implant, éventuellement obtenus par génie génétique.

### Kits

La présente demande décrit également, de manière avantageuse, un ensemble ou kit comprenant plusieurs parties radiculaires telles que définies ci-avant, de tailles et/ou formes différentes. Plus préférentiellement, il s'agit d'un kit comprenant des parties radiculaires adaptées aux principales formes dentaires rencontrées chez l'être humain, plus particulièrement aux 26 formes de dents. Selon la dent extraite, le praticien dispose ainsi d'un jeu d'implants de préparation, lui permettant de sélectionner le plus adapté.

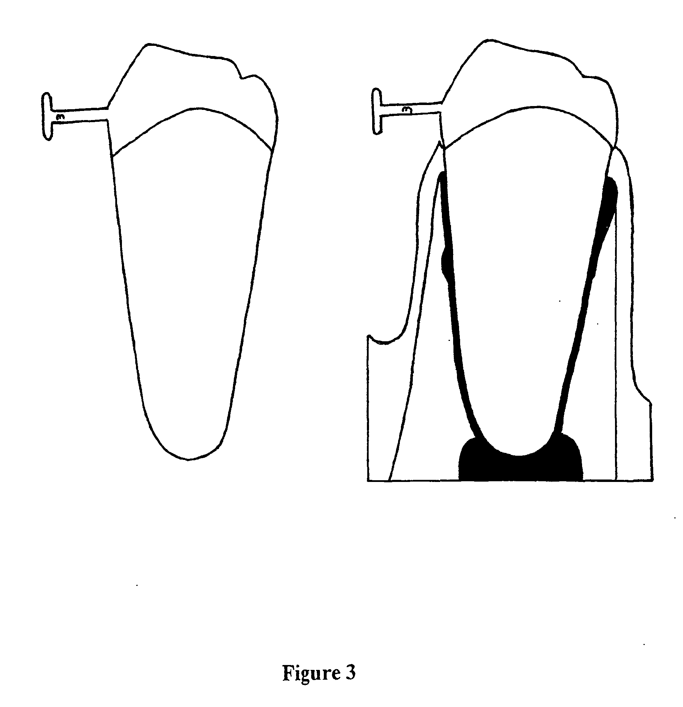

Comme indiqué, la demande décrit également des modèles de dents (voir figure n°3), utilisables par exemple comme jauge. Ces modèles sont typiquement jetables, et réalisés dans un matériau biocompatible, de manière préférentielle, en résine ou à base de résine. Le modèle peut-être muni, sur sa face vestibulaire, d'un picot de préhension qui permet sa manipulation par le praticien grâce à des précelles ou à une pince porte-aiguille, et d'un trou pour passer un fil de sécurité. Le modèle peut être monochrome, mais il permet avantageusement de visualiser le collet de la dent pour le placer au niveau de la gencive. Plusieurs modèles (jusqu'à 26 modèles), adaptés aux différents types de morphologie des racines d'un être humain, permettent de couvrir la grande majorité des besoins. Le praticien pourra, à l'aide des modèles disponibles, choisir la forme la mieux adaptée d'implant de préparation de l'alvéole.

La présente demande décrit ainsi un kit de préparation à la pose d'un implant dentaire destiné au praticien, qui comprend :
- 1 ou plusieurs modèles (de préférence 26 modèles) permettant de jauger la taille et/ou la forme de l'implant de préparation adéquat et donc celle de l'implant définitif, et/ou
- 1 ou plusieurs modèles (de préférence 26 modèles) d'implants de préparation de l'alvéole, de morphologie correspondantes ou de parties radiculaires de tels implants de préparation, et/ou
- 1 ou plusieurs modèles (de préférence 42 modèles) de couronnes à rainures, pour les sutures et en sous-occlusion, et/ou
- 1 ou plusieurs modèles (de préférence 42 modèles) de couronnes provisoire à régler en sous-occlusion ou en occlusion (ces couronnes peuvent également servir pour l'implant définitif), et/ou
- une ou plusieurs compositions actives, destinées à être disposées dans la partie radiculaire creuse de l'implant de préparation de l'alvéole.

Il est entendu que ces différents éléments peuvent être conditionnés de manières différentes, par exemple en sachets, boites, etc., de préférence individuels, généralement en conditions stériles.

### Utilisation / Mise en place

La mise en place de l'implant de préparation d'une alvéole, selon l'invention, comprend l'installation de la partie radiculaire et de la partie coronaire qui recouvre et ferme la première.

L'installation de l'ensemble peut être facilitée par l'utilisation préalable d'un ou plusieurs modèles de dents réalisés dans un matériau biocompatible, comme décrit ci-avant. Le modèle permet de jauger, après extraction de la dent à remplacer, la taille de l'alvéole, de la modifier éventuellement, et de faire le choix de l'implant de préparation correspondant en forme, ainsi que du futur implant définitif.
Après mise en place, l'implant dentaire transitoire est maintenu par toute technique adaptée (collage, suture, etc.). De préférence, il est maintenu par suture au moyen de fils en matériau biodégradable ou par collage de la partie coronaire aux dents voisines, au moyen d'un composite.
Lorsque l'implant définitif est prêt et/ou lorsque l'alvéole destinée à le recevoir est suffisamment cicatrisée, l'implant transitoire est retiré et remplacé par l'implant définitif. Cette période est déterminée par le praticien en fonction du cas à traiter, et peut varier de quelques semaines à quelques mois, généralement de 1 à 6 mois, avantageusement de 1 à 3 mois.
La réparation consécutive à une lésion tissulaire (extraction, fracture, forage d'alvéole par exemple) passe par trois phases successives, se chevauchant plus ou moins : une phase inflammatoire, une phase de prolifération cellulaire et une phase de remodelage tissulaire.
La phase inflammatoire déclenche le processus par l'apport des éléments de l'immunité, la phagocytose des composants lésés et détruits et des bactéries présentes, par activation des macrophages. C'est une phase globalement destructrice.
Le relargage de cytokines et de facteurs de croissance, notamment le PDGF libéré par les plaquettes sanguines lors de la coagulation, initie les phases suivantes orientées vers la réparation tissulaire.
Les facteurs de croissance qui ont une action significative sur la prolifération cellulaire sont le PDGF, le TGFb et l'IGF. Après une extraction dentaire, les cellules qui prolifèrent sont les fibroblastes résiduels, des cellules indifférenciées péri-vasculaires et médullaires osseuses. La phase de prolifération commence dès 48 heures et se poursuit pendant 2 à 3 semaines après tout trauma. Elle aboutit au tissu dit de granulation qui est à son maximum vers 8 jours.

Le PDGF et l'IGF ont également une action sur la chémotaxie - la migration - de ces cellules vers la lésion pour la recoloniser.
La différenciation des cellules avant qu'elles ne puissent reconstituer la matrice tissulaire est sous l'influence de nombreux facteurs physico-chimiques. Les facteurs de croissance type EGF, IGF, TGF et BMP peuvent avoir une action, tout comme d'autres molécules plus spécifiques telles que les amélogénines par exemple. Les contraintes mécaniques jouent également un rôle important à ce niveau.
La phase de remodelage est la période où les cellules qui ont cessé de proliférer produisent la ou les matrices spécifiques des tissus à réparer. Par exemple, dans le parodonte, une population de fibroblastes va produire le collagène qui rétablira les fibres conjonctives structurant le tissu et lui donnant sa résistance aux tensions et les ostéoblastes vont sécréter la matrice minéralisable qui va se charger de cristaux d'hydroxy-apatite pour redonner le tissu osseux. Des cémentoblastes pourront au contact des racines dentaires, dans des lésions parodontales, rétablir la connexion entre les fibres conjonctives et la surface radiculaire par la régénération d'un « cément ».

Dans le cadre des techniques connues d'implantologie ostéo-intégrée, le délai admis de cicatrisation entre l'extraction de la dent compromise et la pose de l'implant visant à la remplacer est de 6 à 12 mois, augmenté du délai d'ostéo-intégration qui, lui, est de 3 à 6 mois (Adell et coll., 1981).

L'implant de préparation de l'alvéole et les méthodes selon l'invention, permettent, par la libération des facteurs de croissance appropriés et un certain degré de stimulation physiologique (réduit par rapport à la normale des contraintes subies habituellement par une dent), d'accélérer la cicatrisation et de mieux préparer le site à la mise en place de l'implant définitif, ostéo ou parodonto-intégré. S'il est admis que trop ou pas assez de sollicitations réduisent la réparation osseuse, les stimulations mécaniques apportées par les techniques de l'invention au niveau de l'alvéole sont appropriées par le fait que la couronne placée sur l'implant de préparation est en sous-occlusion et ne transmet que partiellement les pressions de la mastication.
La technique selon l'invention permet ainsi de diminuer le délai normal de cicatrisation d'un facteur trois environ, et d'améliorer les conditions d'intégration ou d'insertion de l'implant définitif.

## Revendications

1. Implant dentaire non-ostéo-intégrable de préparation d'une alvéole comprenant une partie coronaire et une partie radiculaire dissociables, ladite partie radiculaire, creuse et en polytétrafluoroéthylène (PTFE) et comportant des trous ou pertuis responsable de sa porosité partielle, lesdits trous ou pertués ayant un diamètre suffisant pour assurer une diffusion effective d'une composition active au niveau de l'alvéole.

2. Implant dentaire selon la revendication 1, **caractérisée en ce que** la partie coronaire recouvre et ferme la partie radiculaire de préférence à l'aide d'un ciment provisoire.

3. Implant dentaire selon la revendication 2, **caractérisée en ce que** la partie coronaire comprend un pertuis facilitant la dissociation, par l'exercice d'un mouvement de levier, de ladite partie coronaire et de la partie radiculaire.

4. Implant dentaire selon l'une quelconque des revendications 2 ou 3, **caractérisée en ce que** la partie coronaire est en matériau biocompatible, par exemple en résine ou en composite.

5. Implant dentaire selon la revendication 4, **caractérisée en ce que** la partie coronaire est en résine méthylmétacrylate simple ou en composite à base de résine méthylmétacrylate chargée.

6. Implant dentaire selon l'une quelconque des revendications précédentes, **caractérisée en ce que** la partie radiculaire comporte une cavité pouvant contenir une ou plusieurs compositions actives.

7. Implant dentaire selon la revendication 6, **caractérisée en ce que** la cavité est compartimentée et peut ainsi contenir, dans chaque compartiment, une composition active particulière qui agit à un niveau donné de l'alvéole.

8. Implant dentaire selon la revendication 6 ou 7, **caractérisée en ce que** la composition active se présente sous forme solide, liquide, sous forme de gel ou de pâte ou sous forme micro-encapsulée.

9. Implant dentaire selon l'une quelconque des revendications 6 à 8, **caractérisée en ce que** la composition active contient au moins un antibiotique, par exemple la tétracycline ou le métronidazole et/ou un insaponifiable de maïs, de soja ou d'avocat et/ou une vitamine et/ou un ou plusieurs facteurs de croissance et/ou un ou plusieurs composants hémostatiques et/ou une ou plusieurs hormones, par exemple la dexaméthasone et/ou une ou plusieurs autres molécules préparant le site receveur de l'implant, éventuellement obtenues par génie génétique.

## Claims

1. Non osteo-integrable alveolar dental preparation implant comprising separable coronary and radicular parts, said radicular part, hollow and in polytetrafluoroethylene (PTFE) and including pores or channels responsible for its partial porosity, said pores or channels having a diameter large enough to ensure effective diffusion of an active composition in the alveola.

2. Dental implant according to claim 1, **characterized in that** the coronary part covers and seals the radicular part preferably with the help of a temporary cement.

3. Dental implant according to claim 2, **characterized in that** the coronary part comprises a channel allowing the dissociation, by carrying out a lever movement, of said coronary part and the radicular part.

4. Dental implant according to anyone of claims 2 or 3, **characterized in that** the coronary part is made of biocompatible material, for example resin or composite.

5. Dental implant according to claim 4, **characterized in that** the coronary part is in simple methylmethacrylate resin or composite based on loaded methylmethacrylate resin.

6. Dental implant according to anyone of the preceding claims, **characterized in that** the radicular part includes a cavity that is able to contain one or more active compositions.

7. Dental implant according to claim 6, **characterized in that** the cavity is divided into compartments and so can contain, in each compartment, a particular active composition which acts at a given part of the alveola.

8. Dental implant according to claim 6 or 7, **characterized in that** the active composition is in solid or liquid form, in the form of a gel or paste or is micro-encapsulated.

9. Dental implant according to anyone of claims 6 to 8, **characterized in that** the active composition contains at least one antibiotic, for example tetracycline or metronidazole and/or unsaponifiable maize, soya or avocado and/or a vitamin and/or one or more growth factors and/or one or more hemostatic agents and/or one or more hormones, for example dexamethasone and/or one or more other compounds preparing the receptor site of the implant, optionally obtained by genetic engineering.

## Patentansprüche

1. Dentalimplantat, nicht osseointegrierbar, zur Präparation einer Alveole, umfassend ein Kronenteil und ein Wurzelteil, die voneinander trennbar sind, wobei besagtes Wurzelteil, das hohl ist und aus Polytetrafluorethylen (PTFE) besteht, Poren oder Öffnungen umfasst, die für seine partielle Porosität verantwortlich sind, wobei besagte Poren oder Öffnungen einen hinreichenden Durchmesser besitzen, um eine wirksame Diffusion einer aktiven Zusammensetzung auf Ebene der Alveole sicherzustellen.

2. Dentalimplantat gemäß Anspruch 1, **dadurch gekennzeichnet, dass** das Kronenteil das Wurzelteil vorzugsweise mit Hilfe eines provisorischen Zements abdeckt und verschließt.

3. Dentalimplantat gemäß Anspruch 2, **dadurch gekennzeichnet, dass** das Kronenteil eine Öffnung umfasst, die die Trennung besagten Kronenteils von dem Wurzelteil mittels Ausübung einer Hebelbewegung erleichtert.

4. Dentalimplantat gemäß einem der Ansprüche 2 oder 3, **dadurch gekennzeichnet, dass** das Kronenteil aus einem biokompatiblen Material, zum Beispiel aus einem Harz oder Verbundmaterial, besteht.

5. Dentalimplantat gemäß Anspruch 4, **dadurch gekennzeichnet, dass** das Kronenteil aus einem einfachen Methylmethacrylat-Harz oder einem Verbundmaterial auf Basis eines beladenen Methylmethacrylat-Harzes besteht.

6. Dentalimplantat gemäß einem der vorhergehenden Ansprüche, **dadurch gekennzeichnet, dass** das Wurzelteil einen Hohlraum umfasst, der eine oder mehrere aktive Zusammensetzungen enthalten kann.

7. Dentalimplantat gemäß Anspruch 6, **dadurch gekennzeichnet, dass** der Hohlraum unterteilt ist und folglich in jedem Kompartiment eine spezielle aktive Zusammensetzung enthalten kann, die auf eine bestimmte Ebene der Alveole einwirkt.

8. Dentalimplantat gemäß Anspruch 6 oder 7, **dadurch gekennzeichnet, dass** die aktive Zusammensetzung in fester, flüssiger Form, in Form eines Gels oder einer Paste oder in mikroverkapselter Form vorliegt.

9. Dentalimplantat gemäß einem der Ansprüche 6 bis 8, **dadurch gekennzeichnet, dass** die aktive Zusammensetzung wenigstens ein Antibiotikum, zum Beispiel Tetracyclin oder Metronidazol, und/oder eine nicht verseifbare Komponente von Mais, Soja oder Avokado und/oder ein Vitamin und/oder einen oder mehrere Wachstumsfaktoren und/oder eine oder mehrere hämostatische Komponenten und/oder ein oder mehrere Hormone, zum Beispiel Dexamethason, und/oder ein oder mehrere weitere Moleküle, die die Einpflanzungsstelle des Implantats präparieren und gegebenenfalls gentechnisch gewonnen sind, enthält.
